# EUROPEAN PATENT APPLICATION

(11) **EP 4 832 184 A1**
(43) Date of publication of application: **28.10.2026**
(21) Application number: 24907155.6
(22) Date of filing: 04.12.2024
(51) Int. Cl.: H01M 50/204, H01M 10/613, H01M 10/643, H01M 10/6554, H01M 10/6556, H01M 10/6562, H01M 50/213

(54) **POWER SUPPLY DEVICE AND METHOD FOR MANUFACTURING SAME**

(30) Priority: 21.12.2023 JP 2023215992
(71) Applicant: Panasonic Intellectual Property Management Co., Ltd., Kadoma-shi, Osaka 571-0057 (JP)
(72) Inventor: KANKAKU, Mai, Kadoma-shi, Osaka 571-0057 (JP); OOTURU, Toshiya, Kadoma-shi, Osaka 571-0057 (JP); KAWAKAMI, Satoshi, Kadoma-shi, Osaka 571-0057 (JP)
(74) Representative: Eisenführ Speiser
(86) International application number: PCT/JP2024/042814
(87) International publication number: WO 2025/134768

(57) **Abstract**

A power supply device includes a plurality of secondary battery cells that each have a cell end face, one or more battery blocks that house the plurality of secondary battery cells, a battery cooler that is thermally coupled to the battery block, and an exterior case that houses the battery block and the battery cooler. The battery cooler defines a cooling air path through which cooling air flows, and causes the cooling air path to communicate with an outside through the exterior case, and the power supply device further includes a battery waterproof portion that waterproofs a gap between the battery block and the exterior case. As a result, it is possible to waterproof the battery block while securing the cooling air path from the outside of the exterior case by using the battery cooler, and it is possible to simplify the waterproof structure while air-cooling the secondary battery cell.

## Description

### TECHNICAL FIELD

The present disclosure relates to a power supply device and a method for manufacturing the power supply device.

### BACKGROUND ART

A power supply device having a plurality of rechargeable secondary battery cells such as a lithium ion secondary battery connected in series or in parallel and housed in an exterior case is used for driving an electric device such as an electric tool or driving an electric moving body, such as a vehicle or a construction machine (for example, PTL 1). Since the secondary battery cell used in such a power supply device generates heat by charging and discharging, it is necessary to cool the secondary battery cell. For this reason, in order to cool the secondary battery cell by air cooling, while a cooling air flow path for allowing cooling air to flow is formed between the secondary battery cells, an opening is provided in the exterior case and caused to communicate with the cooling flow path.

On the other hand, a power supply device or the like used outdoors is required to have waterproofness. For this reason, it is necessary to prevent occurrence of an unintended short circuit inside due to water ingress from the outside while providing an opening for taking in cooling air from the outside in the exterior case, and a complicated structure has been required in order to implement conflicting characteristics.

### Citation List

### Patent Literature

PTL 1: International Publication Pamphlet No. WO 2017/175487

### SUMMARY OF THE INVENTION

An object of an aspect of the present disclosure is to provide a power supply device capable of cooling a secondary battery cell while ensuring waterproof performance of the secondary battery cell, and a method for manufacturing the power supply device. Moreover, an object of another aspect is to provide a novel power supply device and a method for manufacturing the power supply device. Note that the description of these objects and problems in the present disclosure does not preclude the existence of other objects and problems. Moreover, one aspect of the present disclosure is not required to solve all of these problems. Further, problems other than these problems can be extracted from the description, drawings, and claims of the present disclosure.

A power supply device according to an aspect of the present disclosure is a power supply device that includes: a plurality of secondary battery cells each having a cell end face; at least one battery block that houses the plurality of secondary battery cells; a battery cooler that is thermally coupled to the at least one battery block; and an exterior case that houses the at least one battery block and the battery cooler, wherein the battery cooler defines a cooling air path through which cooling air flows, and the cooling air path communicates with an outside through the exterior case, and the power supply device further includes a battery waterproof portion that waterproofs a gap between the at least one battery block and the exterior case.

According to the power supply device according to the aspect of the present disclosure, it is possible to waterproof the battery block while securing the cooling air path from the outside of the exterior case by using the battery cooler, and it is possible to simplify the waterproof structure while air-cooling the secondary battery cell.

### BRIEF DESCRIPTION OF THE DRAWINGS

Fig. 1 is a perspective view illustrating a power supply device according to a first exemplary embodiment.
Fig. 2 is a perspective view of the power supply device of Fig. 1 as viewed obliquely from below on a rear side.
Fig. 3 is an exploded perspective view in which an upper case of the power supply device of Fig. 1 is disassembled.
Fig. 4 is a further exploded perspective view of the power supply device of Fig. 3.
Fig. 5 is an exploded perspective view of the power supply device of Fig. 2.
Fig. 6 is a cross-sectional view taken along line VI-VI of the power supply device of Fig. 1.
Fig. 7 is an exploded perspective view of a battery module of Fig. 4.
Fig. 8 is a perspective view illustrating one battery block of Fig. 4.
Fig. 9 is a plan view of one battery block of Fig. 4.
Fig. 10 is an exploded perspective view in which a lead plate is disassembled from the battery block in Fig. 8.
Fig. 11 is an exploded perspective view illustrating a state where the battery block of Fig. 10 is removed from a holder case.
Fig. 12 is an exploded perspective view of a battery holder of Fig. 11.
Fig. 13 is a cross-sectional view taken along line XIII-XIII of the power supply device of Fig. 1.

### DESCRIPTION OF EMBODIMENT

An exemplary embodiment of the present disclosure may also be specified by the following configurations and features.

In the above aspect, in a power supply device according to another aspect of the present disclosure, the at least one battery block holds the plurality of secondary battery cells such that cell end faces of a same polarity of the plurality of secondary battery cells are aligned on a same plane, and a surface of the at least one battery block on which the cell end faces are arranged in the same plane is coupled to the battery cooler. With the above configuration, the cooling by the battery cooler can be efficiently performed from the cell end face side of the secondary battery cell.

Moreover, in any one of the above aspects, in a power supply device according to another aspect of the present disclosure, the at least one battery block includes two battery blocks, and the battery cooler is arranged between the two battery blocks. With the above configuration, each battery block can be efficiently cooled on both sides of one battery cooler.

Further, in any one of the above aspect, in a power supply device according to another aspect of the present disclosure, the at least one battery block holds the plurality of secondary battery cells, such that the cell end face at a negative electrode side of each of the plurality of secondary battery cells faces the battery cooler. With the above configuration, in a case where a gas release valve that opens when an internal pressure becomes high is provided on the cell end face on the positive electrode side of the secondary battery cell, in a case where a high-temperature and high-pressure gas is accidentally released from one secondary battery cell, other secondary battery cells are not arranged on the side facing the cell end face, in other words, the cell end faces on which the gas release valve is not provided are arranged in a posture facing each other. As a result, safety can be enhanced.

Furthermore, in any one of the above aspect, in a power supply device according to another aspect of the present disclosure, the battery cooler includes a plurality of slit-shaped openings that define the cooling air path, and each of the plurality of slit-shaped openings is opened along a direction in which the plurality of secondary battery cells face each other. With the above configuration, since each slit is opened to face the secondary battery cell, it is possible to efficiently cool the secondary battery cell by allowing the cooling air to flow through each slit.

Furthermore, in any one of the above aspect, in a power supply device according to another aspect of the present disclosure, the exterior case includes a partition portion that holds the at least one battery block inside the exterior case, the partition portion defines a partition opening through which the battery cooler is exposed, and the battery waterproof portion is provided between a periphery of the partition opening and a periphery of the battery cooler.

Furthermore, in any one of the above aspect, in a power supply device according to another aspect of the present disclosure, the exterior case includes an external first opening in part of a surface of the exterior case to communicate the cooling air path defined by the battery cooler with an outside, and the battery waterproof portion includes an opening waterproof structure that waterproofs the at least one battery block and that is provided between a periphery of the external first opening and the periphery of the battery cooler. With the above configuration, it is possible to prevent an unintended short circuit of the secondary battery cells in the battery block by opening the external first opening in a part of the exterior case and waterproofing the external first opening and the battery block while achieving cooling by introducing cooling air into the exterior case.

Hereinafter, an exemplary embodiment of the present disclosure will be described with reference to the drawings. However, the exemplary embodiment to be described below are examples for embodying the technical idea of the present disclosure, and the present disclosure is not limited to the exemplary embodiment to be described below. Moreover, in the present specification, members indicated in the claims are not necessarily limited to the members described in the exemplary embodiment. In particular, dimensions, materials, shapes, relative arrangements, and the like of components described in the exemplary embodiment are not intended to limit the scope of the present disclosure exclusively unless otherwise specified, and are merely illustrative examples. Note that sizes and positional relationships of members illustrated in each drawing may be exaggerated to clarify the explanation. Further, in the following description, the same names and reference marks indicate the same or similar members, such that detailed description thereof will be omitted as appropriate. Further, each element constituting the present disclosure may include an aspect in which a plurality of elements are constituted by one member and the one member serves as the plurality of elements, or conversely, a function of one member may be shared and implemented by a plurality of members.

The power supply device of the present disclosure can be used as a power source of a portable electric device such as an electric tool or an electric cleaner, as a power source for driving a moving body such as an electric cart, an electric scooter, or a power-assisted bicycle, as a power source for backup of a server or a power supply device for home use, business use, or factory use for stationary power storage, or as a power source for driving a vehicle such as a hybrid vehicle or an electric vehicle. Hereinafter, a power supply device used as a power source for driving an electric tool will be described as an exemplary embodiment of the present invention.

### [First exemplary embodiment]

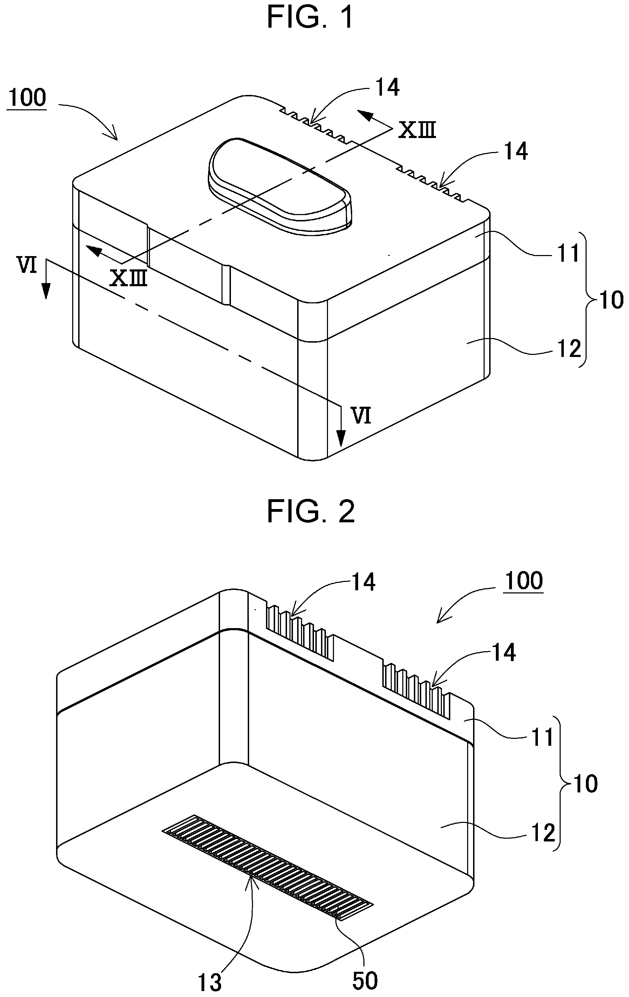

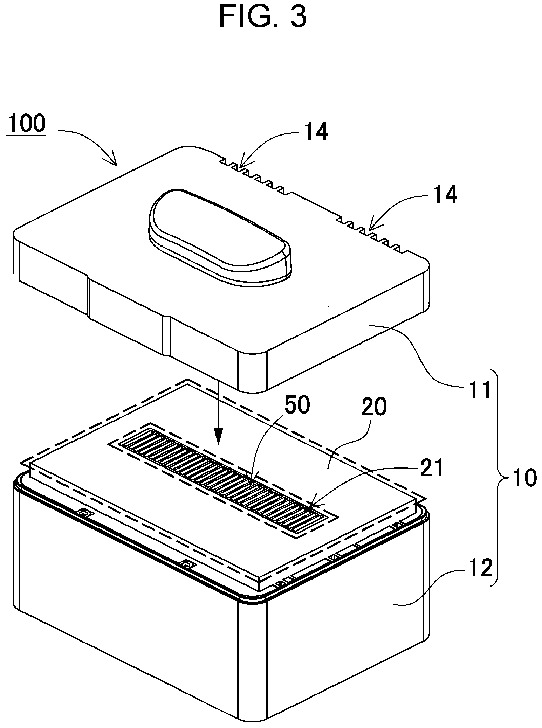

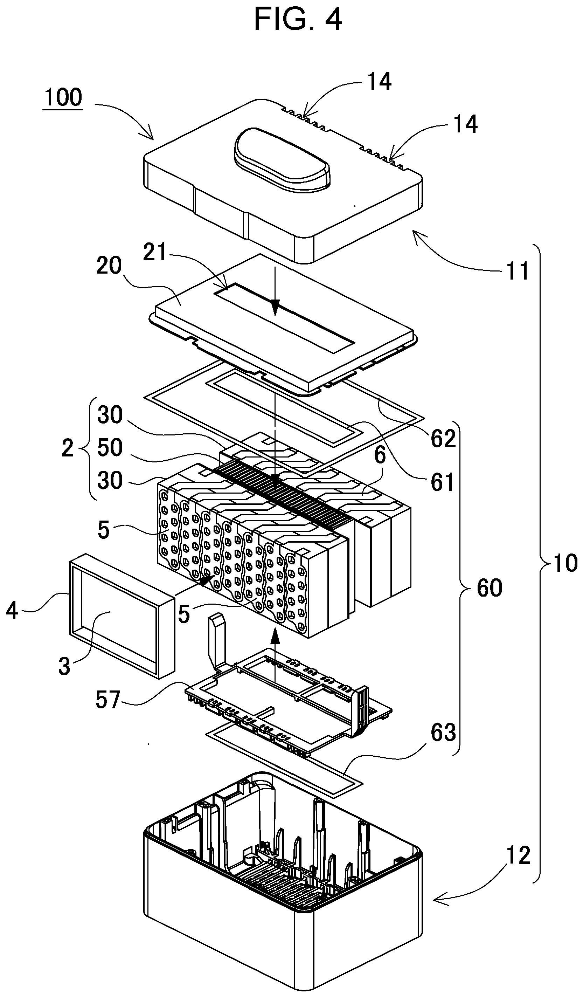

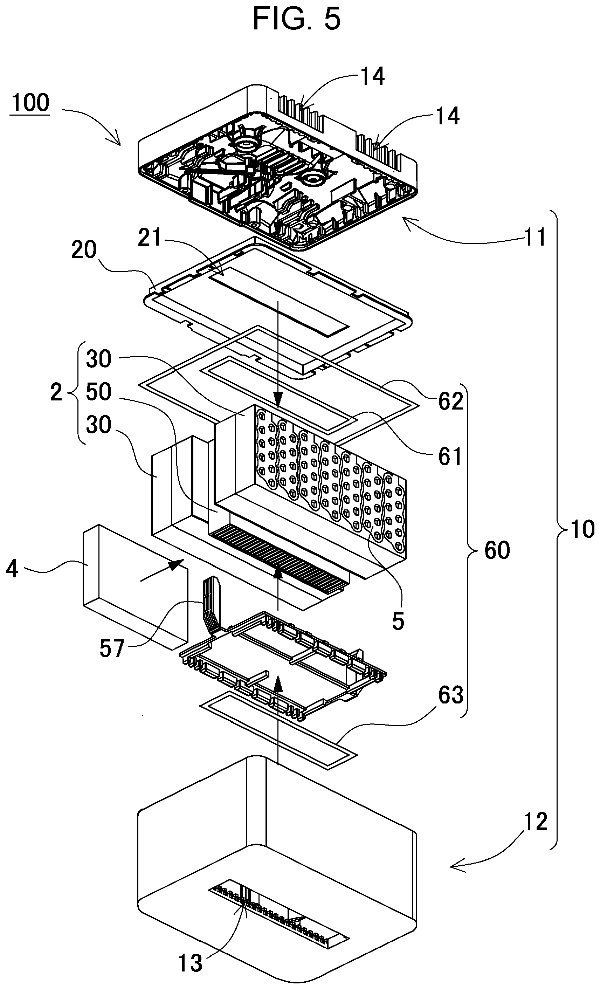

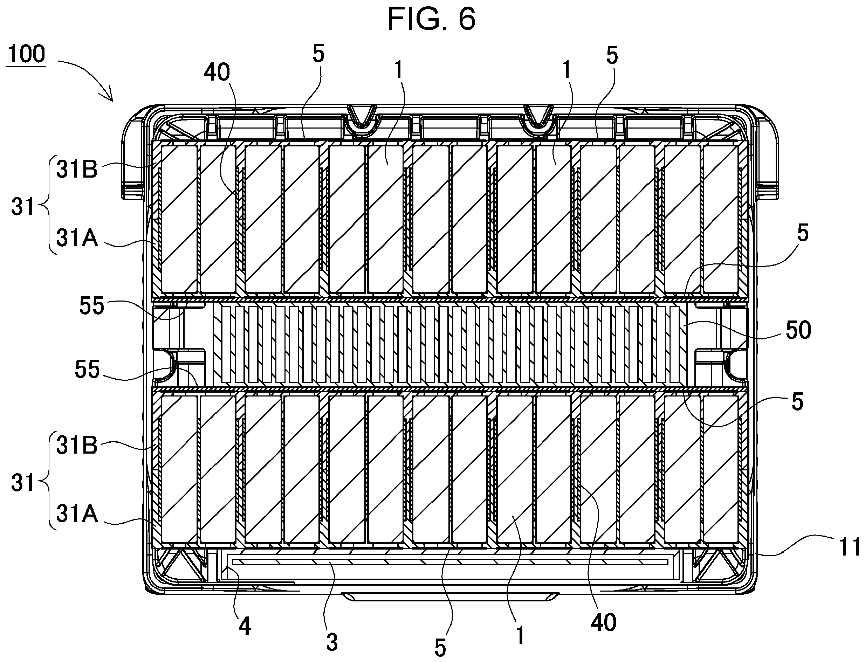

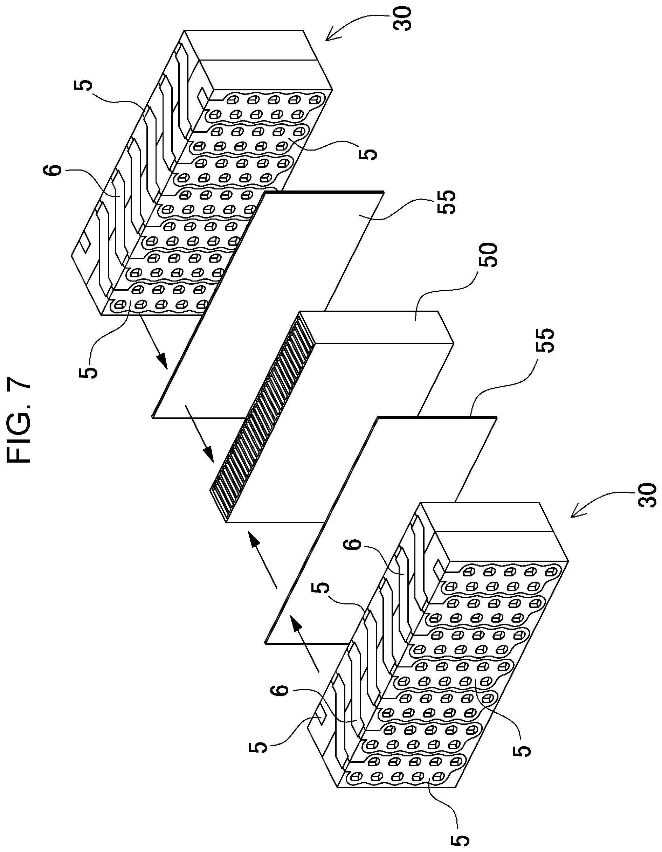

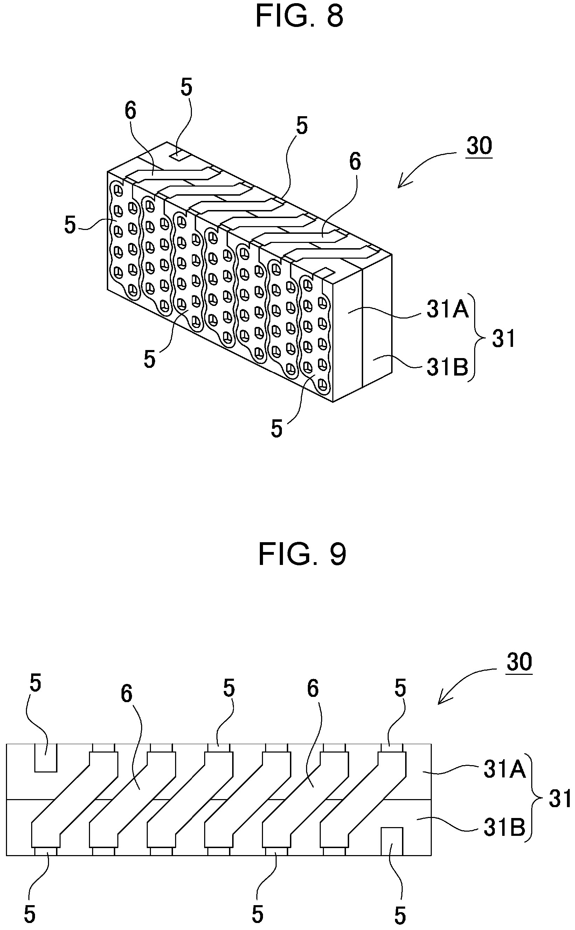

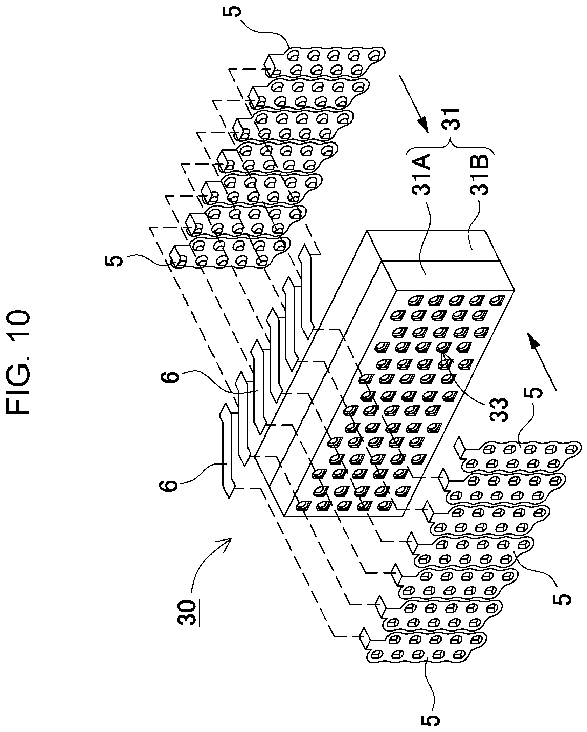

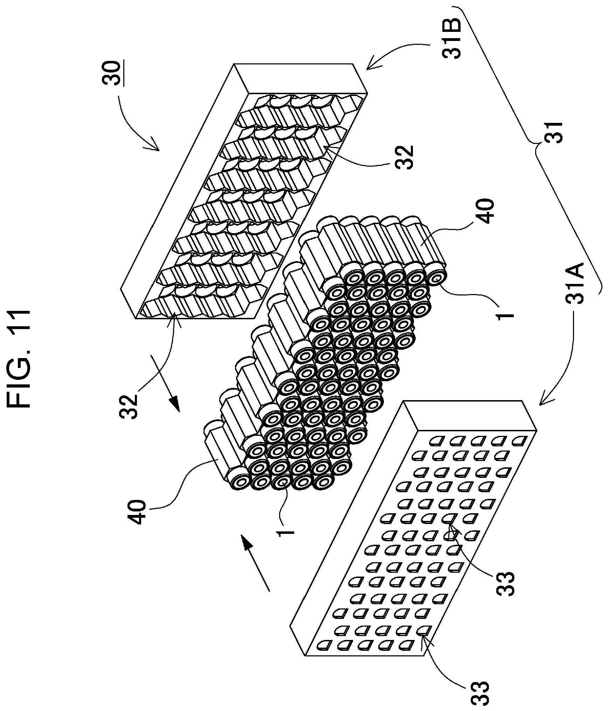

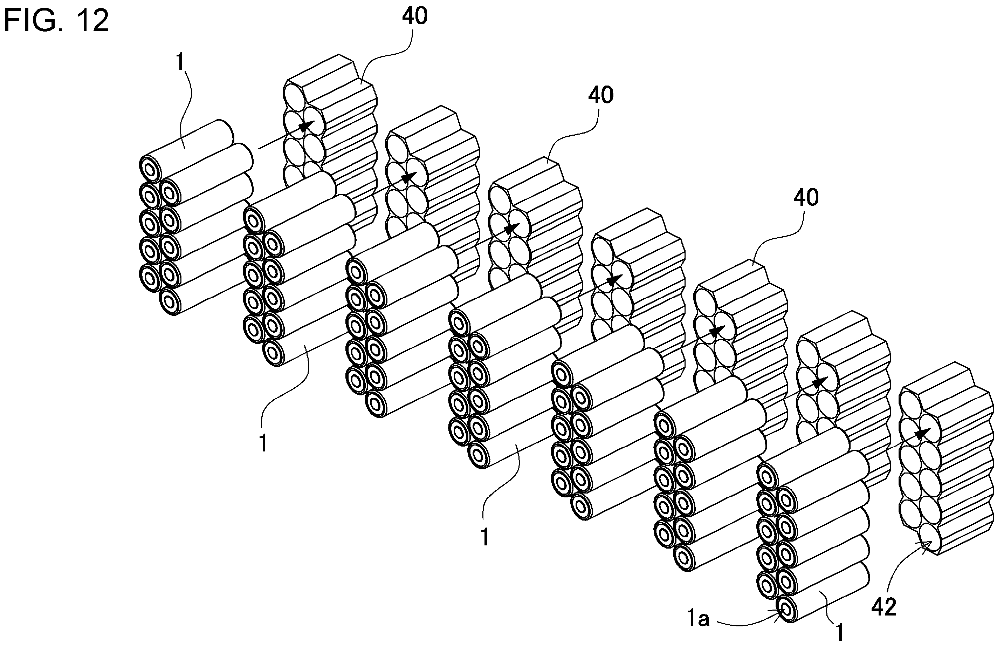

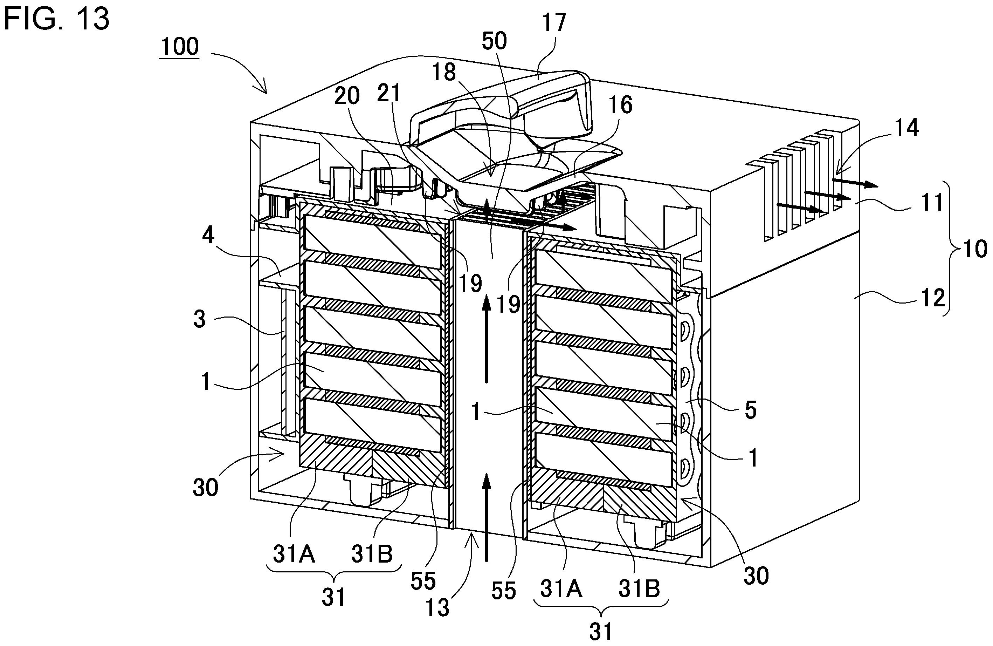

Power supply device 100 according to a first exemplary embodiment of the present disclosure is illustrated in Figs. 1 to 13. In these drawings, Fig. 1 is a perspective view illustrating power supply device 100 according to the first exemplary embodiment, Fig. 2 is a perspective view of power supply device 100 of Fig. 1 as viewed obliquely from below on a rear side, Fig. 3 is an exploded perspective view in which upper case 11 of power supply device 100 of Fig. 1 is disassembled, Fig. 4 is a further exploded perspective view of power supply device 100 of Fig. 3, Fig. 5 is an exploded perspective view of power supply device 100 of Fig. 2, Fig. 6 is a cross-sectional view taken along line VI-VI of the power supply device 100 of Fig. 1, Fig. 7 is an exploded perspective view of battery module 2 of Fig. 4, Fig. 8 is a perspective view illustrating one battery block 30 of Fig. 4, Fig. 9 is a plan view of battery block 30 of Fig. 4, Fig. 10 is an exploded perspective view in which lead plate 5 is disassembled from battery block 30 in Fig. 8, Fig. 11 is an exploded perspective view illustrating a state where battery block 30 of Fig. 10 is removed from holder case 31, Fig. 12 is an exploded perspective view of battery holder 40 of Fig. 11, and Fig. 13 is a cross-sectional view taken along line XIII-XIII of the power supply device 100 of Fig. 1, respectively. Power supply device 100 illustrated in these drawings includes exterior case 10, battery module 2, and circuit board 3.

### (Exterior case 10)

Exterior case 10 houses battery module 2 and circuit board 3. As an outer shape of exterior case 10, any shape having a housing space in the inside can be used. In the example illustrated in Figs. 1 to 6, exterior case 10 is formed in a box shape whose appearance is extended in one direction (lateral direction in the drawings). As illustrated in Figs. 3 to 5, box-shaped exterior case 10 includes upper case 11 and lower case 12 obtained by vertically dividing the exterior case into two parts. However, the present disclosure is not limited to this configuration, and the exterior case may be divided into three or more parts. Moreover, the exterior case may be divided into left and right parts.

Exterior case 10 is preferably made of a member having excellent insulation properties, for example, a resin such as polycarbonate or a PC-ABS alloy, and the like. However, the exterior case may be made of a metal member such as aluminum or an alloy thereof. Moreover, an internal space for housing battery module 2 and circuit board 3 is provided inside exterior case 10. In the example illustrated in Figs. 5 and 6 and the like, an internal space is formed in lower case 12 to house battery module 2 and circuit board 3. In the internal storage space, a portion in which battery blocks 30 of battery module 2 and circuit board 3 are arranged is waterproofed by battery waterproof portion 60.

### (Partition portion 20)

Moreover, partition portion 20 is arranged on an upper surface of battery module 2. Partition portion 20 is installed at an opening end in an upper portion of lower case 12, and battery module 2 and circuit board 3 are housed in an internal space of lower case 12 defined by partition portion 20. Partition openings 21 are provided in partition portion 20, and as illustrated in Fig. 3, an upper portion of battery cooler 50 is exposed from partition opening 21. As a result, battery cooler 50 communicates with an outside, and cooling air can be introduced into or discharged from battery cooler 50.

Further, in exterior case 10, external first opening 13 and external second opening 14 are formed in a part thereof. External first opening 13 and external second opening 14 communicate with a cooling air path of battery cooler 50. In the example illustrated in Figs. 2 and 5, external first opening 13 is opened in a bottom surface of exterior case 10, and external second opening 14 is opened on an upper side of a rear surface of exterior case 10 (details will be described later).

### (Battery waterproof portion 60)

Power supply device 100 includes battery waterproof portion 60 for waterproofing battery block 30 housed in exterior case 10 while providing an opening for allowing the cooling air to flow in exterior case 10. With battery waterproof portion 60, it is possible to avoid a situation where water or the like enters the inside of exterior case 10 through the opening of partition portion 20 provided in exterior case 10 or a gap around the opening. As a specific configuration of battery waterproof portion 60, first sealing portion 61 is arranged between partition portion 20 and battery module 2 as illustrated in Fig. 4 and the like. As a result, a waterproof structure that waterproofs a portion of battery module 2 other than a portion exposed through partition opening 21 is implemented.

Each first sealing portion 61 is formed in an annular shape slightly larger than partition opening 21. In the example of Fig. 4, first sealing portion 61 provided along each partition opening 21 is formed in an oblong shape.

Moreover, a space between a periphery of partition portion 20 and lower case 12 of exterior case 10 is also waterproofed by second sealing portion 62. As a result, a portion indicated by a broken line in Fig. 3 can be made a waterproof structure, and a portion other than battery cooler 50 can also be waterproofed.

Further, on the bottom surface of power supply device 100, battery waterproof portion 60 is also provided between a lower part of battery cooler 50 and external first opening 13 of lower case 12. Specifically, as illustrated in the exploded perspective view of Fig. 5, third sealing portion 63 is arranged around external first opening 13. Third sealing portion 63 constitutes an opening waterproof structure that is provided between a periphery of external first opening 13 and a periphery of battery cooler 50 and waterproofs battery block 30. Therefore, the internal space in which battery block 30 and circuit board 3 of exterior case 10 are arranged is partitioned by partition portion 20 in lower case 12 of exterior case 10, since a periphery of partition opening 21 of partition portion 20 is waterproofed by first sealing portion 61, a space between the periphery of partition portion 20 and lower case 12 of exterior case 10 is waterproofed by second sealing portion 62, and the periphery of external first opening 13 is waterproofed by third sealing portion 63, a waterproof structure is obtained except for a portion exposed through partition opening 21 and a portion exposed through external first opening 13. With such a configuration, it is possible to prevent an unintended short circuit of secondary battery cell 1 in battery block 30 by opening external first opening 13 in a part of exterior case 10 and waterproofing the external first opening and battery block 30 while performing cooling by introducing the cooling air into exterior case 10.

As first sealing portion 61, second sealing portion 62, and third sealing portion 63, a known member that can exhibit waterproofness can be appropriately used, and for example, a waterproof double-sided tape, a packing, an O-ring, or the like can be used. The same material or structure may be used for first sealing portion 61, second sealing portion 62, and third sealing portion 63, or different materials or structures may be used.

### (Battery module 2)

Battery module 2 is also referred to as a core pack or the like, and houses a plurality of secondary battery cells 1. Moreover, the battery module may include a plurality of battery blocks 30, and the plurality of secondary battery cells 1 may be housed in each battery block 30. In the example of Figs. 4, 6, and 7, and the like, two battery blocks 30 are stacked to constitute battery module 2.

### (Holder case 31)

Each battery block 30 includes holder case 31, battery holder 40, secondary battery cell 1, and lead plate 5. Holder case 31 has a box-shaped outer shape as illustrated in Fig. 8. A holder housing space is formed inside holder case 31, and battery holder 40 is housed in a holder housing space. Moreover, holder case 31 in Figs. 8 to 11 is divided into two parts, and front holder first case 31A and rear holder second case 31B are joined. However, the holder case is not limited to a structure in which the holder case is divided into two parts, and may be divided into three or more parts. Holder case 31 is made of a material having excellent insulation properties. Preferably, the holder case is made of resin such as polycarbonate or a PC-ABS alloy.

### (Battery holder 40)

Battery holder 40 houses and holds the plurality of secondary battery cells 1. For this reason, a plurality of cell housing cylinders 42 that individually house secondary battery cells 1 are provided in battery holder 40. In the example illustrated in Figs. 10 to 12, an outer shape of each cell housing cylinder 42 is formed in a hexagonal shape. For this reason, an outer shape of battery holder 40 is formed in a honeycomb shape. However, a shape of the battery holder is not limited to this configuration, and for example, an outer shape of each housing cylinder may be formed into a polygonal shape such as an octagonal shape or a cylindrical shape.

On the other hand, the inside of cell housing cylinder 42 is formed in a size capable of housing secondary battery cell 1. Preferably, as illustrated in Fig. 12 and the like, the inside of each cell housing cylinder 42 is formed in a cylindrical shape into which a cylindrical exterior can of secondary battery cell 1 can be inserted such that cylindrical secondary battery cell 1 can be housed. Moreover, a gap between the exterior can of secondary battery cell 1 inserted into cell housing cylinder 42 and an inner surface of cell housing cylinder 42 is preferably small. By bringing the exterior can and cell housing cylinder 42 into surface contact with each other, secondary battery cell 1 is thermally coupled to battery holder 40, and heat generated in secondary battery cell 1 is efficiently thermally conducted to battery holder 40 side. As a result, a cooling effect of secondary battery cell 1 can be enhanced.

Battery holder 40 is made of a material having a heat transfer property higher than that of resin constituting holder case 31. Battery holder 40 is made of, for example, metal such as aluminum or copper, resin having higher heat transfer property than that of resin constituting holder case 31, or resin containing a metal filler. As a result, heat of secondary battery cell 1 housed in battery holder 40 can be easily dissipated to the outside through battery holder 40.

In battery holder 40, a length of cell housing cylinder 42 is preferably shorter than that of secondary battery cell 1. For example, in the example illustrated in Figs. 11 and 12, in a state where secondary battery cell 1 is housed in each cell housing cylinder 42, an end of secondary battery cell 1 is in a state of protruding from cell housing cylinder 42. With such a configuration, when cell end faces of secondary battery cells 1 are connected to each other by lead plate 5 or the like, even in a case where battery holder 40 having conductivity is used, it is possible to reduce risk of occurrence of unintended conduction due to contact of an end face of battery holder 40 with lead plate 5 or the like.

Moreover, battery holder 40 may be divided into a plurality of parts. Battery holder 40 divided into a plurality of parts can be stacked and housed in holder case 31. In the example illustrated in Figs. 11 and 12, seven battery holders 40 are stacked in the lateral direction and are housed in holder case 31. At this time, a joining surface for joining adjacent battery holders 40 is preferably formed in a periodic shape to facilitate stacking. For example, with a side surface of polygonal cell housing cylinder 42, a protrusion and a recess are formed on a side surface of each battery holder 40, and the protrusion and recess are engaged with each other. In the example illustrated in Fig. 12, a side surface of each battery holder 40 has an isosceles trapezoidal shape as a protrusion, a flat surface is formed at a top portion, and a recess is a valley of a V shape. As a result, the protrusion and the recess can be meshed with each other.

### (Case cylindrical portion 32)

Moreover, on an inner surface side of holder case 31, case cylindrical portion 32 that covers the end of secondary battery cell 1 housed in battery holder 40 is formed. In the example illustrated in Fig. 11, case cylindrical portion 32 having a cylindrical shape is integrally formed with holder case 31 at a position corresponding to each end of secondary battery cell 1 on the inner surface side of holder case 31.

### (Lead plate 5)

Moreover, battery block 30 includes lead plate 5 for electrically connecting secondary battery cells 1 to each other. Lead plate 5 is preferably arranged on an outer surface side of holder case 31. Moreover, in holder case 31, electrode window 33 communicating with case cylindrical portion 32 is opened on a side surface in order to connect lead plate 5 arranged on the outer surface side to a terminal of secondary battery cell 1.

Each lead plate 5 connects electrodes on cell end faces of secondary battery cells 1 to one another to connect the plurality of secondary battery cells 1. Lead plate 5 is made of a metal plate having excellent conductivity, such as an aluminum plate, a nickel plate, or a copper plate. The plurality of secondary battery cells 1 are connected in series or in parallel via lead plate 5. The number of series connections and the number of parallel connections can be arbitrarily set according to required specifications. In the example of Fig. 10 and the like, end faces of 10 secondary battery cells are mainly connected to each lead plate 5, and a total of 70 secondary battery cells 1 are used in one battery block 30 to form 7 series × 10 parallel. Moreover, in the example of Fig. 4, two battery blocks 30 are stacked in a longitudinal direction of secondary battery cells 1, these battery blocks 30 are connected in series, and a total of 140 secondary battery cells 1 are arranged in 14 series × 10 parallel. However, the number and connection form of the secondary battery cells, that is, the number in series and the number in parallel are not limited to this configuration.

### (Bus bar 6)

Moreover, lead plates 5 are connected to each other by bus bars 6 as necessary. By connecting some of lead plates 5 by bus bars 6, a series or parallel pattern of secondary battery cells 1 is formed and is connected to circuit board 3 and an output terminal. In the example of battery block 30 in Figs. 9 and 10, an upper end of lead plate 5 is bent and connected to bus bar 6 to implement 7 series × 10 parallel. Here, all secondary battery cells 1 are held by battery block 30 in a posture in which the same poles of the cell end faces are arranged on the same plane. In Fig. 9, a lower surface side of battery block 30 is a positive electrode, and an upper surface side thereof is a negative electrode.

### (Circuit board 3)

Battery block 30 is connected to circuit board 3 via lead plate 5 and bus bar 6. On circuit board 3, a charge and discharge circuit for charging and discharging secondary battery cell 1, a protection circuit for monitoring voltage and temperature of secondary battery cell 1 and stopping current at the time of abnormality, and the like are mounted. Circuit board 3 includes a glass epoxy substrate or the like. Moreover, board holder 4 may be arranged as a member for holding circuit board 3.

### (Secondary battery cells 1)

As illustrated in Figs. 10 and 11, each battery block 30 houses secondary battery cell 1 in holder case 31. Secondary battery cell 1 is housed and held in cell housing cylinder 42 of battery holder 40. A secondary battery cell having a cylindrical or prismatic outer shape can be used as each secondary battery cell 1. In the examples illustrated in Figs. 6, 10 to 12, and the like, cylindrical secondary battery cells 1 are arranged and used in a staggered manner in a horizontal orientation. Note that the number and arrangement of secondary battery cells 1 are not limited to this example, and any number and arrangement can be appropriately adopted. For example, the cylindrical secondary battery cells may be arranged in a matrix. For secondary battery cell 1, a known secondary battery such as a lithium ion secondary battery, a nickel metal hydride battery, or a nickel cadmium battery can be appropriately used.

Each secondary battery cell 1 has positive and negative electrodes. A terminal of the positive electrode or the negative electrode is preferably provided on one cell end face of secondary battery cell 1. In the example of Figs. 10 to 12 and the like, a positive-electrode terminal is provided on one cell end face of secondary battery cell 1, and another surface of an exterior can is a negative electrode. In the example illustrated in Fig. 10, each secondary battery cell 1 is held by battery holder 40 in a posture where positive electrodes of all secondary battery cells 1 are on the same side (front side in the drawing).

Moreover, gas release valve 1a is provided in the exterior can of each secondary battery cell 1. Gas release valve 1a is opened in response to an increase in an internal pressure of the exterior can, and releases gas inside the exterior can to the outside. Such a gas release valve 1a is provided, for example, on a positive electrode side of secondary battery cell 1.

Exterior case 10 opens external first opening 13 and external second opening 14. The cooling air is taken in from external first opening 13, introduced into exterior case 10, subjected to heat exchange inside exterior case 10, and discharged from external second opening 14. For example, a fan or the like is provided to forcibly allow the cooling air to flow. External first opening 13 and external second opening 14 are preferably provided on different surfaces of exterior case 10 such that the cooling air can be smoothly taken into and discharged from exterior case 10. In the example illustrated in Fig. 2, external first opening 13 is opened on the bottom surface of exterior case 10, and external second opening 14 is opened on the upper side of the rear surface of exterior case 10. Note that, in the present disclosure, as illustrated in Fig. 13 and the like to be described below, an example in which the cooling air is taken in from external first opening 13 and discharged from external second opening 14 has been described. However, the present disclosure is not limited to this configuration, and it goes without saying that the cooling air may be taken in from the external second opening and discharged from the external first opening.

External first opening 13 and external second opening 14 may be opened in a plurality of slit shapes in addition to being opened in a rectangular shape. As a result, a total opening area can be increased by forming a plurality of slits while narrowing an opening of each slit to suppress entry of a foreign matter. In the example of Fig. 5, external first opening 13 is opened in a rectangular shape, while external second opening 14 has a slit shape.

External first opening 13 is opened at a position corresponding to battery cooler 50 housed inside exterior case 10. As a result, the cooling air path of battery cooler 50 is exposed from exterior case 10 through external first opening 13, and secondary battery cells 1 housed in battery holder 40 can be efficiently cooled by fresh cooling air introduced into exterior case 10 through external first opening 13. The cooling air flows to an upper surface of battery block 30 while traveling along the cooling air path while exchanging heat with secondary battery cell 1 in battery block 30. Then, the air is guided to an upper portion of exterior case 10, that is, the inside of upper case 11 in Fig. 13 through partition opening 21 of partition portion 20, and then discharged through external second opening 14 opened above the rear surface of exterior case 10. In this way, the cooling air flows inside exterior case 10, and an intermediate portion of secondary battery cell 1 housed in battery block 30 can be directly cooled.

### (Battery cooler 50)

Moreover, battery module 2 includes battery cooler 50 that is thermally coupled to battery block 30. Battery cooler 50 defines therein a cooling air path through which the cooling air flows. An upper end and a lower end of battery cooler 50 are opened, and the cooling air path internally communicates. Further, the cooling air path communicates with the outside of power supply device 100 through exterior case 10. Specifically, as illustrated in Fig. 13, the lower end of battery cooler 50 is exposed from external first opening 13 opened in the bottom surface of exterior case 10. Moreover, the upper end of battery cooler 50 is exposed from partition opening 21 of partition portion 20. Further, partition opening 21 communicates with external second opening 14 of exterior case 10. As a result, the cooling air path of battery cooler 50 communicates with the outside of power supply device 100, and the cooling air taken in from the outside can flow inside exterior case 10 to cool battery block 30 by heat exchange. An upper space inside exterior case 10 is formed above partition opening 21. A part of a facing surface of the upper end of battery cooler 50 on an inner wall of exterior case 10 is inclined surface 16, and a flow of the cooling air flowing out from the upper end of battery cooler 50 is bent by inclined surface 16 and directed toward external second opening 14. Note that inclined surface 16 of the facing surface of the upper end of battery cooler 50 on the inner wall of exterior case 10 is formed by recess 18 provided by forming, in upper case 11 of exterior case 10, handle 17 used when power supply device 100 is conveyed. Moreover, a plurality of ribs 19 extending in an inclined direction are formed on inclined surface 16, the strength of a plate surface of an inclined surface portion of exterior case 10 is improved, and the cooling air is straightened by these ribs 19.

Moreover, in the cooling air path, battery waterproof portion 60 that waterproofs a gap between battery block 30 and exterior case 10 is provided. With such a configuration, battery block 30 is waterproofed while the cooling air path is secured from the outside of exterior case 10 by using battery cooler 50, and thus, the waterproof structure can be simplified while secondary battery cell 1 is air-cooled.

In the structure in which the cooling air flows into the exterior case and cooling is performed by air cooling, an opening is inevitably provided in the exterior case to secure a flow path of air. However, on the other hand, in order to prevent the unintended short circuit of the secondary battery cell housed inside the exterior case, a waterproof structure for protecting the battery block housing each secondary battery cell from external water or the like is required. As described above, since it is necessary to waterproof the secondary battery cell housed inside while providing the opening in the exterior case, a complicated structure has been required. On the other hand, in power supply device 100 according to the present exemplary embodiment, as described above, battery block 30 has the waterproof structure, and battery cooler 50 is thermally coupled to battery block 30. As a result, contradictory requirements are achieved by protecting a portion requiring waterproofing as a waterproof structure while exterior case 10 is opened and air-cooled.

In the example of Fig. 13 and the like, battery cooler 50 is sandwiched and stacked between two battery blocks 30 to constitute battery module 2. By arranging battery cooler 50 between battery blocks 30 in this manner, each battery block 30 can be efficiently cooled on both sides of one battery cooler 50.

### (Thermally conductive sheet 55)

As illustrated in Fig. 7, thermally conductive sheet 55 is interposed between holder case 31 constituting battery block 30 and battery cooler 50 to improve thermal bonding at an interface between battery block 30 and battery cooler 50. As thermally conductive sheet 55, a sheet material having excellent thermal conductivity and insulating properties and preferably having a certain degree of elasticity can be used. Examples of such a material include acrylic-based, urethane-based, epoxy-based, and silicone-based resins. Moreover, a plastic sheet filled with a filler having excellent thermal conductivity, mica, or the like may be used. As a filler having excellent thermal conductivity, a ceramic filler or a metal filler can be blended in a resin. Further, a structure where a heat conductive paste such as silicon oil can be applied between thermally conductive sheet 55 and battery cooler 50 to more efficiently conduct heat can be obtained.

Moreover, as thermally conductive sheet 55, for example, an elastically deformable cushion sheet having a thickness of 1 mm to 3 mm and excellent thermal conductivity can be used. Thermally conductive sheet 55 is sandwiched between holder case 31 and battery cooler 50 in a crushed state, and is brought into close contact with holder case 31 and battery cooler 50. As a result, the formation of a heat insulating layer due to the generation of the gap is reduced, and holder case 31 and battery cooler 50 are brought into close contact with each other in a thermally coupled state to efficiently dissipate heat from secondary battery cell 1.

Moreover, the plurality of secondary battery cells 1 are held by battery block 30 in a posture in which the same poles are arranged in the same plane on the cell end faces. Then, surfaces of battery blocks 30 on which the cell end faces are arranged in the same plane are coupled to battery cooler 50. With such a configuration, cooling by battery cooler 50 can be efficiently performed from the cell end face side of secondary battery cell 1. In particular, as illustrated in the cross-sectional view of Fig. 6, the cell end faces of secondary battery cells 1 housed in battery block 30 are arranged in a posture of facing battery cooler 50, and thus, all secondary battery cells 1 are thermally coupled to battery cooler 50. As a result, each secondary battery cell 1 can be efficiently air-cooled.

### (Case holder 57)

In the example of Fig. 7 and the like, battery cooler 50 is formed to be slightly smaller in size than battery block 30. By interposing thermally conductive sheet 55, heat can be dissipated through thermally conductive sheet 55 even in a region where battery cooler 50 does not overlap battery block 30. In the example illustrated in Figs. 4 and 5, battery module 2 in which battery cooler 50 is sandwiched between battery blocks 30 is held in lower case 12 also by case holder 57. Case holder 57 positions and holds battery module 2 in exterior case 10, and functions as a cushioning material that protects battery block 30 in a case where an external force such as vibration or impact is applied to power supply device 100. For such case holder 57, a resin material or a cushion material can be used.

Further, it is preferable to arrange secondary battery cells 1 in a posture in which the cell end faces on the negative electrode side face battery cooler 50 side. With such an arrangement, in a case where a gas release valve that opens when an internal pressure becomes high is provided on the cell end face on the positive electrode side of secondary battery cell 1, in a case where a high-temperature and high-pressure gas is accidentally released from one secondary battery cell 1, other secondary battery cells 1 are not arranged on the side facing the cell end face, in other words, the cell end faces on which the gas release valve is not provided are arranged in a posture facing each other. As a result, safety can be enhanced.

As illustrated in Fig. 4, Fig. 7, and the like, battery cooler 50 opens the cooling air paths in a plurality of slit shapes. Each slit is opened along a direction in which the plurality of secondary battery cells 1 face each other. With such a configuration, since each slit is opened to face secondary battery cell 1, it is possible to efficiently cool secondary battery cell 1 by allowing the cooling air to flow through each slit.

For such battery cooler 50, an air-cooling duct can be used. Battery cooler 50 is made of a material having excellent thermal conductivity. Battery cooler 50 is formed by extrusion molding of aluminum, for example.

Moreover, according to the waterproof structure in which battery block 30 and battery cooler 50 are separated, circuit board 3 can also be waterproofed. That is, by arranging circuit board 3 to be isolated from the cooling air path for flowing the cooling air, which is provided between external first opening 13 and external second opening 14, circuit board 3 can also waterproofed by the waterproof structure. In the example illustrated in Figs. 6, 13, and the like, circuit board 3 is arranged on a side of battery block 30 opposite to a side where battery cooler 50 is provided. As a result, in addition to the short circuit of the terminal of secondary battery cell 1, it is possible to effectively prevent the unintended conduction of circuit board 3.

In the above example, the power supply device is attached to an electric device to be driven and supplies power to the electric device. In a case where remaining capacity of the power supply device becomes small or the power supply device degrades over time, the power supply device can be replaced and the electric device can be continuously used. However, the present invention is not limited to a replaceable power supply device mainly housing a secondary battery cell, and can also be applied to an exemplary embodiment in which a secondary battery cell is housed in a housing of an electric device. In the present disclosure, the power supply device only needs to house a secondary battery cell in a case, and the power supply device also includes one in which a secondary battery cell for driving is incorporated in a housing of an electric device itself. That is, the present invention is not limited to a replaceable power supply device, and can also be applied to an electric device incorporating a secondary battery cell.

### INDUSTRIAL APPLICABILITY

The power supply device according to the present disclosure can be suitably used as a power source for driving a power-assisted bicycle, a power source for driving a self-propelled robot for home delivery, an electric cart for home delivery and a golf course, an electric scooter, a construction machine, and a vehicle such as a hybrid vehicle and an electric vehicle. Moreover, the power supply device can also be appropriately used as a power source or the like for portable electric devices such as a wireless device, an electric cleaner, and an electric tool. Moreover, the power supply device can also be applied to a cooling mechanism of an electric device incorporating a heating element without limitation to a power source. Alternatively, the power supply device can also be used for a stationary power storage device, for example, a power supply device for home, business, or factory, a backup power source of a server, or the like.

### REFERENCE MARKS IN THE DRAWINGS

- 100: power supply device
- 1: secondary battery cell
- 2: battery module
- 3: circuit board
- 4: board holder
- 5: lead plate
- 6: bus bar
- 10: exterior case
- 11: upper case
- 12: lower case
- 13: external first opening
- 14: external second opening
- 16: inclined surface
- 17: handle
- 18: recess
- 19: rib
- 20: partition portion
- 21: partition opening
- 30: battery block
- 31: holder case
- 31A: holder first case
- 31B: holder second case
- 32: case cylindrical portion
- 33: electrode window
- 40: battery holder
- 42: cell housing cylinder
- 50: battery cooler
- 55: thermally conductive sheet
- 57: case holder
- 60: battery waterproof portion
- 61: first sealing portion
- 62: second sealing portion
- 63: third sealing portion

## Claims

1. A power supply device comprising:
a plurality of secondary battery cells each having a cell end face;
at least one battery block that houses the plurality of secondary battery cells;
a battery cooler that is thermally coupled to the at least one battery block; and
an exterior case that houses the at least one battery block and the battery cooler,
wherein the battery cooler defines a cooling air path through which cooling air flows, and the cooling air path communicates with an outside through the exterior case, and
the power supply device further includes a battery waterproof portion that waterproofs a gap between the at least one battery block and the exterior case.

2. The power supply device according to Claim 1,
wherein the at least one battery block holds the plurality of secondary battery cells such that cell end faces of a same polarity of the plurality of secondary battery cells are aligned in a same plane, and
a surface of the at least one battery block on which the cell end faces are arranged in the same plane is coupled to the battery cooler.

3. The power supply device according to Claim 2,
wherein the at least one battery block includes two battery blocks, and
the battery cooler is arranged between the two battery blocks.

4. The power supply device according to Claim 3,
wherein the at least one battery block holds the plurality of secondary battery cells such that the cell end face at a negative electrode of each of the plurality of secondary battery cells faces the battery cooler.

5. The power supply device according to Claim 3,
wherein the battery cooler includes a plurality of slit-shaped openings that define the cooling air path, and
each of the plurality of slit-shaped openings is opened along a direction in which the plurality of secondary battery cells face each other.

6. The power supply device according to any one of Claims 1 to 5,
wherein the exterior case includes a partition portion that holds the at least one battery block inside the exterior case,
the partition portion defines a partition opening through which the battery cooler is exposed, and
the battery waterproof portion is provided between a periphery of the partition opening and a periphery of the battery cooler.

7. The power supply device according to Claim 6,
wherein the exterior case includes an external first opening in part of a surface of the exterior case to communicate the cooling air path defined by the battery cooler with an outside of the exterior case, and
the battery waterproof portion includes an opening waterproof structure that waterproofs the at least one battery block and that is provided between a periphery of the external first opening and the periphery of the battery cooler.

8. A power supply device comprising:
a plurality of secondary battery cells each of which has cell end faces of a positive electrode and a negative electrode;
at least one battery block that houses the plurality of secondary battery cells;
a battery cooler that is thermally coupled to the at least one battery block; and
an exterior case that houses the at least one battery block and the battery cooler,
wherein the battery cooler defines a cooling air path through which cooling air flows, and the cooling air path communicates with an outside through the exterior case, and
the power supply device further includes a battery waterproof portion that waterproofs a gap between the at least one battery block and the exterior case.

9. The power supply device according to Claim 8,
wherein the at least one battery block includes a holder case,
the holder case holds the plurality of secondary battery cells such that cell end faces of the plurality of secondary battery cells are aligned in a same plane, and
the holder case of the at least one battery block is thermally coupled to the battery cooler.

10. The power supply device according to Claim 9,
wherein the at least one battery block includes two battery blocks, and
the battery cooler is arranged between the two battery blocks.

11. The power supply device according to Claim 10,
wherein the at least one battery block holds the plurality of secondary battery cells such that the cell end face at the negative electrode of each of the plurality of secondary battery cells faces the battery cooler.

12. The power supply device according to Claim 10,
wherein the battery cooler includes a plurality of slit-shaped openings that allow the cooling air path to communicate with an outside, and
each of the plurality of slit-shaped openings is opened along a direction in which the two battery blocks sandwiching the battery cooler face each other.

13. The power supply device according to any one of Claims 8 to 12,
wherein the exterior case includes a partition portion that holds the at least one battery block inside the exterior case,
the partition portion defines a partition opening to expose the battery cooler to an interior of the exterior case, and
the battery waterproof portion is provided between a periphery of the partition opening and a periphery of the battery cooler.

14. The power supply device according to Claim 13,
wherein the exterior case includes an external first opening in part of a surface of the exterior case to communicate the cooling air path defined by the battery cooler with an outside of the exterior case, and
the battery waterproof portion includes a waterproof sealing portion provided between a periphery of the external first opening and the periphery of the battery cooler.

15. The power supply device according to Claim 14, wherein
the exterior case further includes an external second opening on a surface different from the surface including the external first opening, and
the partition opening communicates with the external second opening to constitute part of the cooling air path.
